# EUROPEAN PATENT SPECIFICATION

(11) **EP 3 411 344 B1**
(45) Date of publication and mention of the grant of the patent: **24.08.2022**
(21) Application number: 17710615.0
(22) Date of filing: 02.02.2017
(51) Int. Cl.: C05G 5/30, C05G 5/40

(54) **GRANULAR FERTILIZER FORMULATION CAPABLE OF INCREASING THE WATER RETENTION CAPACITY OF SOIL, PROCESS FOR THE PREPARATION THEREOF AND USES THEROF**
KÖRNIGE DÜNGEMITTELFORMULIERUNG ZUR ERHÖHUNG DES WASSERRÜCKHALTEVERMÖGENS VON BODEN, VERFAHREN ZUR HERSTELLUNG DAVON UND VERWENDUNGEN DAVON
FORMULATION D'ENGRAIS GRANULAIRE CAPABLE D'AUGMENTER LA CAPACITÉ DE RÉTENTION D'EAU DU SOL, PROCÉDÉ DE PRÉPARATION ASSOCIÉ ET UTILISATIONS ASSOCIÉES

(30) Priority: 03.02.2016 IT UB20160106
(43) Date of publication of application: 12.12.2018
(73) Proprietor: EURO TSA S.R.L., 24040 Fornovo San Giovanni (IT)
(72) Inventor: NEGRA, Massimiliano, 24040 Fornovo San Giovanni (BG) (IT); BETTI, Marco, 24040 Fornovo San Giovanni (BG) (IT)
(74) Representative: Hoffmann Eitle
(86) International application number: PCT/IB2017/050567
(87) International publication number: WO 2017/134595

(56) References cited:
- WO-A2-02/096547
- DE-A1- 10 215 601
- FR-A1- 3 021 184
- US-A1- 2014 069 158
- US-A1- 2015 353 825
- solvay: "solvay launches new co-formulants and green solvents", agropages.com , 29 June 2015 (2015-06-29), XP002762067, Retrieved from the Internet: URL:http://news.agropages.com/News/NewsDet ail---15174.htm [retrieved on 2016-09-20]

## Description

### Technical field

The present invention relates to a granular fertilizer formulation capable of increasing the water retention capacity of soil. In particular, the present invention relates to a granular fertilizer formulation, in the form of granules, said granules consisting of a fertilizer based on nitrogen (N), or nitrogen-phosphorous (NP) and/or nitrogen-phosphorous-potassium (NPK) and a polymer of vegetable origin capable of increasing the water retention capacity of a crop soil. Furthermore, the present invention relates to a process for the preparation of said formulation and uses thereof.

### Background Art

In agriculture, farmers have always used different types of fertilizers in order to administer the necessary micro substances and/or macro nutrients to seeds and plants by applying said nutrients to the soil and/or leaves.

With the aim of minimizing the use of the nutrients by optimizing it, localized fertilization techniques, in which the fertilizer(s) (both in liquid form and, preferably, in granular form) is(are) distributed in a position close to the seeds or the plant, so as to provide a good starter effect on germination, rooting and the initial phases of development thereof, have been adopted for some time.

The same problem of optimizing and saving an increasingly precious resource has regarded, and still regards, the water used to irrigate crops. This problem has revealed to be very significant, if not dramatic, in arid or sandy areas subject to scant precipitation, temperatures that are high on average and excessive run-off of water resources from the soil.

To the Applicant's knowledge, the attempts made to date to optimize irrigation techniques (where possible) and/or increase the water holding capacity of soils, in particular arid or sandy soils, have not given completely satisfactory results.

FR 3 021 184 A1 discloses a process for the treatment of seeds, which provides an improvement in handling and protecting the seeds. The process disclosed in FR 3 021 184 A1 consists in coating seeds by placing them in contact with an aqueous dispersion. The aqueous dispersion comprises a water-soluble compound *(inter alia:* a derivative of guar gum) and, optionally, other substances, such as a fertilizer.

DE 102 15 601 A1 discloses a water-soluble container containing active substances in solid form that can belong to a variety of fields, such as the field of fertilizers. The solid active substances may be in the form of granules. A coating material for enclosing the solid active substances may be a water-soluble polymer, such as a cationic guar derivative.

WO 02/096547 A2 discloses storage-stable granules comprising an active substance and a vehicle. Said active substance can be - among others - a fertilizer. The vehicle may be - *inter alia* - urea or thiourea. An optional coating of such granules can be a water-soluble polymer such as a cationic derivative of guar gum, chosen from a long list of alternative coating materials.

US 2014/069158 A1 discloses a composition comprising peat moss, an alkoxylate and a polysaccharide such as a derivative of guar gum. Peat moss contains nutrients that are beneficial for plant growth.

US 2015/353825 A1 discloses a method for the prevention of soil erosion that involves the application on/in the soil of a derivative of guar gum (guar-based additive) able to increase the stability of the aggregates soil-water. The guar-based additive can be solid, for example in powder form. The guar-based additive can also contain other additives used in agriculture, such as a fertilizer.

### Technical problem

Thus, there continues to be a demand by those skilled in the art for a fertilizer formulation, preferably having a starter effect, which provides an optimal/optimized input of nutrients and which, at the same time, substantially increases the water retention capacity of the soil, by adequately retaining and releasing water in the area of interest, thereby ensuring sufficient moisture for the seed or roots also in water deficit conditions, as during drought years or in sandy soils.

The object of the present invention is to provide an adequate response to the above-described technical problem.

### Summary of the Invention

After an intense activity of research and development, the Applicant has found that the localized application of a suitable granular fertilizer formulation comprising or, alternatively, consisting of granules which comprise or, alternatively, consist of at least one fertilizing substance based on nitrogen (N) and/or phosphorous (P), and optionally potassium (K), and a selected polymer of vegetable origin, capable of retaining and gradually releasing water, is capable of providing the desired response to the above-described technical problem.

Therefore, an aspect of the present invention relates to a granular fertilizer formulation, having the features as set forth in claim 1.

An aspect of the present invention also relates to a process for the preparation of said granular fertilizer formulation, having the features as set forth in claim 8.

An aspect of the present invention further relates to the use of said granular fertilizer formulation, having the features as set forth in claim 9.

Preferred embodiments of the present invention are set forth in the appended dependent claims.

The preferred embodiments of the present invention described in the detailed description that follows are therein set forth solely by way of example.

### Detailed Description of the Invention

The present invention relates to a water-soluble granular fertilizer formulation comprising granules, said granules being made up of at least one fertilizing substance based on N (nitrogen) or NP (nitrogen and phosphorous) or NPK (nitrogen and phosphorous and potassium) having the capacity to promote the germination and rooting of seeds and plants, in particular, in the initial phases of their development (or even after a transplant of seedlings), wherein an effective amount of a polymer of vegetable origin capable of retaining and gradually releasing water has been inserted and/or absorbed and/or adsorbed and/or incorporated in and/or coated and/or applied on the granules.

Advantageously, said formulation, at the time of its preparation and subsequent use, due to the use of said selected polymer of vegetable origin, has, in the solid granular state, a well-defined, narrow particle size distribution, which does not generate a residue of fine breathable dusts harmful to operators. The granular formulation is water soluble in contact with water and moisture.

Said selected polymer of vegetable origin has been selected from the group consisting of water-soluble derivatives of guar gum; it is a water-soluble cationic polymer derived from guar gum

Said water-soluble cationic polymer derived from guar gum is a polysaccharide polymer (mainly formed from, preferably consisting of, galactose and mannose units, more preferably wherein the polymer is of the galactomannan type and consists of galactose/mannose units with one galactose bond for every 2 of mannose), having a molecular weight of around 200,000-300,000 dalton, such as the one commercially known as AgRHO WR 30^{®} (by the company Solvay); said polymer is present in an amount by weight comprised from 0.5% to 10% by weight, relative to the total weight of the formulation; preferably, from 1% to 5% by weight; more preferably, from 2% to 4% by weight; even more preferably about 3% by weight.

In the granular formulation of the present invention, said granules are homogeneous small granules, or microgranules, having a size /an average diameter / or average particle size (average particle size distribution in accordance with the techniques and equipment known to the person skilled in the art) comprised from 0.01 to 3 mm; preferably, from 0.1 to 2 mm; more preferably, from 0.3 to 1.5 mm; even more preferably, from 0.5 to 1.2 mm.

In the granular formulation of the present invention, said at least one fertilizing substance is selected from the group consisting of nitrogen (N), ammonia nitrogen (N), organic nitrogen (N), ureic nitrogen (N), monoammonium phosphate (MAP) and may further comprise phosphorus pentoxide (P₂O₅), water-soluble phosphorus pentoxide (P₂O₅), phosphorus pentoxide (P₂O₅) soluble in water and neutral ammonium citrate, phosphorus pentoxide (P₂O₅) soluble in 2% formic acid, potassium phosphite, zinc (Zn), zinc (Zn) monosulphate, boron (B), carbon (C), organic carbon (C) of biological origin, humic acids, Leonardite, slow-release humic acid in powder, water-soluble potassium oxide (K₂O), sulphuric anhydride, and mixtures thereof. Said fertilizing substance may be present in an amount by weight comprised from about 80% by weight to about 99.5% by weight, relative to the total weight of the formulation, preferably from 90% to 95% by weight relative to the total weight of the formulation.

According to claim 8, a process for preparing the formulation of the invention comprises the following steps:
- finely grinding all the raw materials of the formulation; then adding and mixing them at room temperature in a mixer for powders, adding water in an amount sufficient to obtain a homogeneous fluid paste of particles;
- directing and making said fluid paste flow on a belt, a fluid bed, in movement, wherein the particles rotate and become stratified so as to form granules/microgranules of the desired size;
- simultaneously with the flowing step, blowing hot air at an initial temperature of 80°C; gradually lowering the temperature to 20°C, so as to obtain the dry granules/microgranules of the invention.

The present invention is also aimed at the use of a granular formulation as previously described as a fertilizer formulation for the treatment of vegetative surfaces that require an increase in the soil water retention capacity, according to claim 9.

In particular, said granular formulation of the invention optimizes the properties of the soil or substrate as regards evaporation, humidification, run-off and erosion, so as to offer an environment favourable to harvests by controlling in an intelligent manner, for example, capillary transport and the micro interface properties in the soil.

The present invention relates to a granular fertilizer formulation comprising or, alternatively, consisting of granules; said granules comprise or, alternatively, consist of at least one fertilizing substance based on nitrogen (N), or nitrogen-phosphorous (NP), or nitrogen-phosphorous-potassium (NPK) having the capacity to favour the germination and rooting of seeds and plants in the initial phases of their development, wherein an effective amount of a polymer of vegetable origin capable of retaining and gradually releasing water has been inserted and/or absorbed and/or adsorbed and/or incorporated in and/or coated on said granules; said polymer being selected from the group consisting of the water-soluble derivatives of guar gum as a water-soluble cationic polymer derived from guar gum.

Preferably, in said granular formulation, said granules comprising or, alternatively, consisting of said at least one fertilizing substance and said water-soluble derivatives of guar gum are homogeneous water-soluble granules, having an average diameter comprised from 0.01 mm to 3 mm, preferably having an average diameter comprised from 0.5 mm to 1.2 mm.

Said at least one fertilizing substance is selected from the group consisting of nitrogen (N), ammonia nitrogen (N), organic nitrogen (N), ureic nitrogen (N); and my further comprise phosphorous (P), monoammonium phosphate (MAP), phosphorus pentoxide (P₂O₅), water-soluble phosphorus pentoxide (P₂O₅), phosphorus pentoxide (P₂O₅) soluble in water and neutral ammonium citrate, phosphorus pentoxide (P₂O₅) soluble in 2% formic acid and potassium phosphite; potassium (K) and water-soluble potassium oxide (K₂O); said fertilizing substance may be present in an amount by weight comprised from about 90% by weight to about 99.5% by weight, relative to the total weight of the formulation.

Preferably, said formulation can further comprise one or more substances selected from among zinc (Zn), zinc (Zn) monosulphate, boron (B), carbon (C), organic carbon (C) of biological origin, humic acids, Leonardite (slow-release humic acid in powder), sulphuric anhydride, and mixtures thereof, in addition to processing additives and co-formulants; all in a variable amount by weight comprised from 0 to 20% by weight, preferably comprised from 0 to 10% by weight, relative to the total weight of the formulation. Preferably, in said granular formulation, said water-soluble cationic polymer derived from guar gum, is the commercial polymer called AgRHO WR 30 (Solvay); said vegetable polymer being present in an amount by weight comprised from 0.5% to 10% by weight, relative to the total weight of the formulation, preferably in an amount by weight comprised from 1% to 5%, even more preferably in an amount by weight of about 3%.

Preferably, said formulation has a specific density comprised from 0.7 Kg/litre to 0.9 Kg/litre, preferably about 0.8 Kg/litre.

The granular formulation of the present invention has demonstrated to be particularly advantageous because of the following characteristics:
- the granule has a very large surface area of contact with the soil: 1 g of formulation contains about 2000 microgranules; and its structure (formed by the homogeneous superimposition of microparticles all containing the same chemical composition) enables it to increase the surface area of contact among the soil, circulating solution and roots by 5-6 times;
- the granule has a particularly homogeneous composition: in fact, given the type of preparation used, it does not consist of a mixture of active ingredients, but is rather a veritable complex, thanks to the presence of said selected vegetable polymer;
- it has an excellent starter effect: in fact, its installation in proximity to the seed or plant, the high concentration of phosphorous and nitrogen and the large contact surface area contribute to significantly improving growth performances;
- it has an excellent effect of water retention (and subsequent release of moisture as needed), thanks to the intimate integration of said above-described polymer derived from guar gum into/onto the granules of the granular formulation.

The use of the granular formulation of the present invention has enabled good production results to be obtained without having to rely on continuous irrigation, also in sandy and arid soils, or drought-prone soils, by increasing the water holding capacity and favouring normal crop development.

Advantageously, thanks to the release of water, which takes place gradually and continuously, the granular formulation, once installed in proximity to the seed or plant, is capable of dissolving gradually and continuously and is thus able to administer the fertilizing substances contained therein, gradually and continuously, inputting the right amounts/concentrations of nitrogen (N) and/or phosphorous (P) and/or potassium (K) in a gradual and continuous manner, and avoiding peaks in the amounts/concentrations that could have undesirable effects on the seeds or roots of the cultivated plant.

In fact, it was verified that every soil (or also any type of substrate) mixed/treated with the granular formulation of the present invention increased its water holding capacity, for example by reducing the losses due to evaporation, percolation and the consequent leaching of the nutrients contained in it. This effect led to an increase in the yields of the fertilizer being used, compared to a granular fertilizer known on the market, the surface area and type of crop being equal.

In practical terms, the use of the formulation of the present invention around the seeds, or seedling, or transplanted seedling created a comfort zone for the seeds themselves and the seedling. In fact, it prevented dangerous hydric stresses in the case of drought, as well as leaching of nutrients in the case of high rainfall.

Solely by way of example, a number of working examples and preferred formulations of the present invention are described hereinbelow.

### Example 1 - Formulation 1 in 0.5 - 1.2 mm granules, specific weight 0.8 Kg/litre

| **Component** | **% (by weight)** |
|---|---|
| MAP (monoammonium phosphate) | 89.00 |
| Leonardite (slow-release humic acid in powder) | 5.00 |
| Zn monosulphate | 3.00 |
| AgRHO WR 30 (polymer) | 3.00 |

### Example 2 - Formulation 2 in 0.5 - 1.2 mm granules, specific weight 0.8 Kg/litre

| **Component** | **% (by weight)** |
|---|---|
| Total nitrogen (N) 12% of which: | |
| Ammonia nitrogen (N) | 12.00 |
| Phosphorus pentoxide soluble in water and citrate | 44.00 |
| Water-soluble phosphorus pentoxide | 41.00 |
| Total Zn | 1.00 |
| AgRHO WR 30 (polymer) | 2.00 |

### Working Example 3

- Formulation 3 in 0.5 - 1.2 mm granules, specific weight 0.8 Kg/litre

| **Component** | **% (by weight)** |
|---|---|
| Phosphorus pentoxide soluble in water and citrate | 44.00 |
| Water-soluble phosphorus pentoxide | 40.00 |
| Total Zn | 0.60 |
| Total B | 0.30 |
| AgRHO WR 30 (polymer) | 5.00 |

### Example 4 - Formulation 4 in 0.5 - 1.2 mm granules, specific weight 0.8 Kg/litre

| **Component** | **% (by weight)** |
|---|---|
| Total nitrogen (N) 20% of which: | |
| Ammonia nitrogen (N) | 1.20 |
| Ureic nitrogen (N) | 18.80 |
| Water-soluble phosphorus pentoxide | 5.00 |
| Water-soluble potassium oxide | 20.00 |
| Water-soluble sulphuric anhydride | 18.00 |
| AgRHO WR 30 (polymer) | 3.00 |

### Example 5 - Formulation 5 in 0.5 - 1.2 mm granules, specific weight 0.8 Kg/litre

| **Component** | **% (by weight)** |
|---|---|
| Total nitrogen (N) 5% of which: | |
| Organic nitrogen (N) | 5.00 |
| Total phosphorus pentoxide (P₂O₅) 16.00 of which: | |
| Phosphorus pentoxide soluble in 2% formic acid | 13% |
| Organic carbon of biological origin | 25% |
| AgRHO WR 30 (polymer) | 3.00 |

### Example 6 - Formulation 6 in 0.5 - 1.2 mm granules, specific weight 0.8 Kg/litre

| **Component** | **% (by weight)** |
|---|---|
| Total nitrogen (N) 10% of which: | |
| Ammonia nitrogen (N) | 10 |
| Phosphorus pentoxide soluble in water and neutral ammonium citrate | 44.50 |
| Water-soluble phosphorus pentoxide | 42% |
| Total zinc (Zn) | 1% |
| AgRHO WR 30 (polymer) | 2.50 |

**Table I Doses and modes of use**

| **Crop** | **Dose Kg/ha** | **Period** |
|---|---|---|
| Grass (lawns) | 20-50 g/m² | Use every 30-45 days starting from spring |
| Maize | 25-35 | Localized at time of planting |
| Sugar beet | 30-40 | Localized at time of planting |
| Soy, Sunflowers and Sorghum | 20-35 | Localized at time of planting |
| Tomatoes | 30-45 | Localized at time of planting/transplanting |
| Tobacco | 30-45 | Localized at time of planting/transplanting |
| Vegetable crops | 25-35 | Localized at time of planting/transplanting |
| Autumn-winter cereals, Rape seed | 25-40 | Localized at time of planting |
| Composts | 30 g/m²/300g/m² | Mix evenly in proximity to the site of use |

In the formulations of the previous examples, it is understood that any percentages needed to reach 100% are made up of common excipients selected from adjuvants, disintegrating and solubilising agents, preservatives, fillers and/or carriers, commonly used in the sector and well known to the person skilled in the art.

The formulations of the present invention have been advantageously used for the cultivation of a large number of crops, among which, by way of absolutely non-limiting example, it is possible to mention: maize, sugar beet, soybean, rice, sunflowers, sorghum, tomatoes, tobacco, vegetables, autumn-winter cereals, rape, alfalfa, grass, composts, fruit bearers and grapevines, and so forth.

### Industrial applicability

The use of the formulation of the present invention has enabled good production results to be obtained without having to rely on continuous irrigation, also in sandy and arid soils, by increasing the water holding capacity and favouring normal crop development.

### Experimental trial in pre-transplant of tomatoes

### Climate pattern and effects on crops

The growing season from May to September was characterized by scant or a complete absence of precipitation in the strictly summer weeks (from the end of June to mid August). This resulted in a high input of water through hoses to avoid hydric stress. The absence of precipitation did not favour the development of *Peronospora* from the end of June until the beginning of August. However, from 10-15 August, some sporadic symptoms of *Peronospora* appeared on the crop.

### Objective of the trial

To evaluate the effectiveness of various pre-transplant fertilizers provided on field-grown tomatoes for industrial processing. Evaluation of the main parameters for the production of a granular formulation based on polymer and peroxide distributed in the peat of the paper pot in the nursery.

### Cultivation operations in the trial

▪ Crop rotation: Peas
▪ Ploughing: T = 0
▪ Harrowing with a rotary harrow: T = 0 + 50 days
▪ Basal dressing 400 kg/ha of Super Robur 15-5-5: T = 0 + 8 months
▪ Harrowing with a spring-tooth harrow: T = 0 + 8 months
▪ Transplanting with a 4-row transplanter: 3 days after harrowing
▪ Herbicide treatment with Titus (Executive) 50 g/ha + Fienzin 70 DF 30 g/ha: 1 month after harrowing
▪ Tilling and fertilization with 800 kg/ha of Super Robur 15-5-5: 6 days after herbicide treatment
▪ Fungicide treatment with a spray bar Ridomil Gold R WG (twice) 5 kg/ha, Thiopron (once) 4 l/ha, Bordeaux mixture (5 times) 1 kg/hl, Kocide 2000 (5 times) 200 g/hl: T = from 0 + 9 to 0 + 11 months, weekly.
▪ Insecticide treatment with spray bar CoStar WG (Bacillus thuringiensis var. kurstaki) 1.5 kg/ha: once at T = 0 + 9 months and once at 0 + 11 months.
▪ Harvest T= 0 + 11.5 months.

A 4-replication experimental scheme was adopted.

There were 10 experimental plots.

**Table II Layout**

| | | | |
|---|---|---|---|
| R2 | | | 7 |
| R1 | | | 7 |
| R4 | 3 | 2 | 1 |
| R3 | 3 | 2 | 1 |
| R2 | 3 | 2 | 1 |
| R1 | 3 | 2 | 1 |
| 4 | 6 | 5 | |
| 4 | 6 | 5 | |
| 4 | 6 | 5 | |
| 4 | 6 | 5 | |

**Table III Test plots**

| PLOT | Product | Water regime |
|---|---|---|
| 1 | Test (comparison) | 100% |
| 2 | Composition Z | 100% |
| 3 | Composition WR (according to the invention) | 100% |
| 4 | Test (comparison) | 70% |
| 5 | Composition Z | 70% |
| 6 | Composition WR (according to the invention) | 70% |
| 7 | Test (comparison) | 130% |

Harvesting consisted in the separation of red, yellow, green and rotten fruit.

At the time of harvest, the fruit was weighed.

After the fruit was weighed, the vegetable biomass of the 6 plants was weighed (identification of the fresh weight). Subsequently, the stems and leaves were placed in an oven at 95°C for 8 hours to identify the dry weight.

After the weighing of the vegetable biomass, the associated roots were unearthed with a spade. They were weighed to identify the fresh weight. Subsequently, the roots were placed in an oven at 95°C for 8 hours to identify the dry weight.

### Results

### Production data, disease detection and statistical analysis

Tables 1 to 6 show the results of the trial. The statistical analysis consisted of an initial analysis of variance (ANOVA test) followed by the SKN test (Student-Newman-Keuls test for p=0.05) for the variables that were most significant from a statistical viewpoint. The results for the *water regime* factor are in tables 4, 5 and 6, whereas the results for the *product* factor are in the first three tables. Tables 7, 8 and 9 also present the degree of significance of their interaction.

**Table 1 - Results and statistical analysis of production data, product factor**

| **PLOT** | **ID** | **A** | **B** | **C** | **D** | **E** | **F** | **G** | **H** | **I** | **J** |
|---|---|---|---|---|---|---|---|---|---|---|---|
| 1 | Test 100% | 64.46 c | 23.05 | 3.52 | 17.1 | 108.1 *b* | 3.49 b | 1.09 | 1.51 | 5.13 | 11.22 |
| 2 | ZN 100% | 85.86 ab | 22.65 | 3.38 | 19.7 | 131.5 a | 4.55 *ab* | 1.04 | 1.45 | 5.90 | 12.94 |
| 5 | Test 70% | 63.08 c | 20.72 | 2.80 | 20.1 | 106.7 *b* | 3.55 *b* | 1.02 | 1.21 | 6.02 | 11.79 |
| 6 | ZN 70% | 70.98 *bc* | 16.26 | 2.59 | 19.0 | 108.8 *b* | 3.97 *b* | 0.79 | 1.11 | 5.69 | 11.56 |
| 7 | WR 70% | 74.52 *bc* | 21.81 | 2.72 | 20.4 | 119.5 *ab* | 4.19 *ab* | 1.07 | 1.17 | 6.13 | 12.57 |

| **Overall mean** | | ***76.42*** | ***20.55*** | ***3.20*** | ***19.63*** | ***119.81*** | ***4.18*** | ***0.98*** | ***1.37*** | ***5.89*** | ***12.43*** |
|---|---|---|---|---|---|---|---|---|---|---|---|
| 9 | Test 130% | 57.86 | 34.20 | 4.53 | 19.1 | 115.7 | 3.18 | 1.63 | 1.95 | 5.73 | 12.49 |

| | | | | | | | | | | | |
|---|---|---|---|---|---|---|---|---|---|---|---|
| a, *b,* c, ... = *mean separation according to Student Newman Keuls test (p=0.05)* Column A: Production of commercial red t/ha Column B: Production of green fruit t/ha Column C: Production of roots as such t/ha Column D: Weight of stems and leaves t/ha Column E: Total biomass as such t/ha Column F: Production of red dm t/ha Column G: Production of green fruit dm t/ha Column H: Production of roots dm t/ha Column I: Production of stems and leaves dm t/ha Column J: Entire plant dm t/ha Q: Alpha-tomatine | | | | | | | | | | | |

**Table 2 - Results and statistical analysis of qualitative data, product factor**

| **PLOT** | **ID** | **K** | **L** | **M** | **N** | **O** | **P** | **Q** | **R** | **S** | **T** | **U** | **V** | **W** |
|---|---|---|---|---|---|---|---|---|---|---|---|---|---|---|
| 1 | Test 100% | 4.7 | 9.4 | 2.3 | 0.0 | 0.4 | 5.6 | 158.0 | 0.3 | 2.7 | 2.4 | 1.1 | 4.7 | 4.2 |
| 2 | ZN 100% | 4.6 | 8.7 | 2.2 | 0.0 | 0.4 | 5.2 | 185.0 | 0.1 | 2.7 | 2.4 | 1.1 | 4.5 | 4.3 |
| 3 | WR 100% | 4.6 | 8.9 | 2.1 | 0.0 | 0.4 | 5.7 | 170.5 | 0.3 | 2.6 | 2.4 | 1.0 | 4.6 | 4.4 |
| 4 | Test 70% | 4.9 | 10.0 | 2.3 | 0.0 | 0.4 | 6.0 | 153.7 | 0.4 | 2.6 | 2.4 | 0.9 | 5.0 | 4.3 |
| 5 | ZN 70% | 4.9 | 9.5 | 2.3 | 0.0 | 0.4 | 5.7 | 169.3 | 0.3 | 2.7 | 2.4 | 1.0 | 4.9 | 4.3 |
| 6 | WR 70% | 4.9 | 9.4 | 2.4 | 0.0 | 0.4 | 5.6 | 187.4 | 0.2 | 2.7 | 2.4 | 0.8 | 4.8 | 4.3 |

| **Overall mean** | | ***4.77*** | ***9.29*** | ***2.26*** | ***0.04*** | ***0.41*** | ***5.64*** | ***171.45*** | ***0.26*** | ***2.66*** | ***2.41*** | ***0.99*** | ***4.73*** | ***4.31*** |
|---|---|---|---|---|---|---|---|---|---|---|---|---|---|---|
| 7 | Test 130% | 4.8 | 9.2 | 2.1 | 0.1 | 0.4 | 4.9 | 217.5 | 0.0 | 2.8 | 2.5 | 0.9 | 4.4 | 4.3 |

| | | | | | | | | | | | | | | |
|---|---|---|---|---|---|---|---|---|---|---|---|---|---|---|
| a, *b,* c, ... = *mean separation according to Student Newman Keuls test (p=0.05)* Column K: Optical residue Column L: Lycopene Column M: Sugars Column N: Lactic Column O: citric Column P: dry Column R: pectin Column S: colour sieved Column T: Colour crushed Column U: Texture Column V: BX MASELLI grading Column W: pH MASELLI grading | | | | | | | | | | | | | | |

**Table 3 - Results and statistical analysis of vegetation data, product factor**

| **PLOT** | **ID** | **X** | **Y** | **Z** | **AA** | **AB** | **AC** | **AD** | **AE** | **AF** | **AG** |
|---|---|---|---|---|---|---|---|---|---|---|---|
| 1 | Test 100% | 48.1 | 72.9 a | 32.5 | 1929.1 | 9.0 | 33.3 *bc* | 745.3 | 4.3 c | 2.6 *c* | 6.51 *b* |
| 2 | ZN 100% | 47.6 | 72.7 a | 32.5 | 1925.9 | 9.0 | 33.3 *bc* | 745.3 | 7.8 a | 4.0 a | 8.49 ab |
| 3 | WR 100% | 47.0 | 72.5 ab | 32.5 | 1933.9 | 10.0 | 36.3 ab | 731.3 | 6.5 ab | 2.8 c | 7.93 ab |
| 4 | Test 70% | 45.6 | 71.4 *b* | 32.5 | 1944.2 | 9.0 | 32.0 c | 748.3 | 5.5 *bc* | 3.0 *bc* | 8.11 ab |
| 5 | ZN 70% | 45.6 | 73.6 a | 32.7 | 1964.1 | 9.0 | 34.4 abc | 721.8 | 6.5 ab | 3.0 *bc* | 9.04 a |
| 6 | WR 70% | 45.7 | 72.8 a | 32.5 | 1948.3 | 9.0 | 33.7 *bc* | 720.8 | 6.0 abc | 3.0 *bc* | 9.57 a |

| **Overall mean** | | ***46.66*** | ***72.70*** | ***32.56*** | ***1945.30*** | ***9.22*** | ***34.16*** | ***736.3*** | ***6.34*** | ***3.14*** | ***8.64*** |
|---|---|---|---|---|---|---|---|---|---|---|---|
| 7 | Test 130% | 45.8 | 73.3 | 33.4 | 1976.0 | 9.0 | 35.1 | 679.5 | 4.0 | 3.0 | 5.01 |

| | | | | | | | | | | | |
|---|---|---|---|---|---|---|---|---|---|---|---|
| a, *b,* c, ... = *mean separation according to Student Newman Keuls test (p=0.05)* *Column X: "Inlet Relative Humidity %" is the humidity inside the leaf stomata,* *Column Y: "Outlet Relative Humidity %" is the humidity surrounding the leaves,* *Column Z: Porometer Temperature °C* *Column AA: Par (µmol m-2 s-1), "Par" is the photosynthetically active radiation,* *Column AB: F low Rate (ml min-1)* *Column AC: "Stomatal Conductance" (mmol m-² s-¹) (it indicates the amount of carbon dioxide that is entering, or water vapour that is exiting through the stomata of a leaf),* *Column AD: "N tester" is an index of the leaf chlorophyll, the higher the value, the higher the amount of chlorophyll,* *"Water productivity" is the ratio between the yield and mm of water that was available to the crop (rainfall + irrigation).* *Column AE: Row coverage (0-10)* Column AF: Height (0-5) Column AG: Water Productivity of commercial fruit dm kg/m³ | | | | | | | | | | | |

**Table 4 - Results and statistical analysis of productive data, water regime factor**

| **Water regime** | **A** | **B** | **C** | **D** | **E** | **F** | **G** | **H** | **I** | **J** |
|---|---|---|---|---|---|---|---|---|---|---|
| 100% | 80.56 a | 20.89 | 3.57 | 19.21 | 124.23 | 4.33 | 0.98 | 1.53 | 5.76 | 12.60 |
| 70% | 72.29 *b* | 20.22 | 2.82 | 20.06 | 115.39 | 4.04 | 0.98 | 1.21 | 6.02 | 12.25 |

| **Overall mean** | **76.42** | ***20.55*** | ***3.20*** | ***19.63*** | ***119.81*** | ***4.18*** | ***0.98*** | ***1.37*** | ***5.89*** | ***12.43*** |
|---|---|---|---|---|---|---|---|---|---|---|
| Test 130% | 57.86 | 34.20 | 4.53 | 19.10 | 115.69 | 3.18 | 1.63 | 1.95 | 5.73 | 12.49 |

| | | | | | | | | | | |
|---|---|---|---|---|---|---|---|---|---|---|
| a, *b,* c, ... = *mean separation according to Student Newman Keuls test (p=0.05)* Definitions of columns A-J: see table 1 | | | | | | | | | | |

**Table 5 - Results and statistical analysis of qualitative data, water regime factor**

| **Water regime** | **K** | **L** | **M** | **N** | **O** | **P** | **Q** | **R** | **S** | **T** | **U** | **V** | **W** |
|---|---|---|---|---|---|---|---|---|---|---|---|---|---|
| 100% | 4.7 | 9.1 | 2.2 | 0.0 | 0.4 | 5.5 | 175.7 | 0.2 | 2.7 | 2.4 | 1.0 | 4.6 | 4.3 |
| 70% | 4.9 | 9.5 | 2.3 | 0.0 | 0.4 | 5.8 | 167.2 | 0.3 | 2.6 | 2.4 | 1.0 | 4.9 | 4.3 |

| **Overall mean** | ***4.8*** | ***9.3*** | ***2.3*** | ***0.0*** | ***0.4*** | ***5.6*** | ***171.4*** | ***0.3*** | ***2.7*** | ***2.4*** | ***1.0*** | ***4.7*** | ***4.3*** |
|---|---|---|---|---|---|---|---|---|---|---|---|---|---|
| Test 130% | 4.8 | 9.2 | 2.1 | 0.1 | 0.4 | 4.9 | 217.5 | 0.0 | 2.8 | 2.5 | 0.9 | 4.4 | 4.3 |

| | | | | | | | | | | | | | |
|---|---|---|---|---|---|---|---|---|---|---|---|---|---|
| Definitions of columns K-W: see table 2 | | | | | | | | | | | | | |

**Table 6 - Results and statistical analysis of vegetation data, water regime factor**

| Water regime | X | Y | Z | AA | AB | AC | AD | AE | AF | AG |
|---|---|---|---|---|---|---|---|---|---|---|
| 100% | 47.5 a | 72.8 | 32.5 | 1934.3 | 9.4 | 34.9 | 741.0 | 6.4 | 3.2 | 8.07 *b* |
| 70% | 45.8 b | 72.6 | 32.6 | 1956.3 | 9.0 | 33.4 | 731.6 | 6.3 | 3.1 | 9.21 a |

| Overall mean | 46.7 | 72.7 | 32.6 | 1945.3 | 9.2 | 34.2 | 736.3 | 6.3 | *3.1* | 8.64 |
|---|---|---|---|---|---|---|---|---|---|---|
| Test 130% | 45.8 | 73.3 | 33.4 | 1976.0 | 9.0 | 35.1 | 679.5 | 4.0 | 3.0 | 5.01 |

| | | | | | | | | | | |
|---|---|---|---|---|---|---|---|---|---|---|
| a, *b,* c, ... = *mean separation according to Student Newman Keuls test (p=0.05)* Definitions of columns X-AG: see table 3 | | | | | | | | | | |

**Table 7 - Statistical significance of factors and their interaction**

| **Factor** | **A** | **B** | **C** | **D** | **E** | **F** | **G** | **H** | **I** | **J** |
|---|---|---|---|---|---|---|---|---|---|---|
| **Water regime factor** | ** | *ns.* | * | *ns.* | *ns.* | * | *ns.* | * | *ns.* | *ns.* |
| **Product factor** | ** | *ns.* | *ns.* | *ns.* | ** | ** | *ns.* | *ns.* | *ns.* | * |
| **Interaction** | *ns.* | * | *ns.* | *ns.* | *ns.* | *ns.* | * | *ns.* | *ns.* | *ns.* |

| | | | | | | | | | | |
|---|---|---|---|---|---|---|---|---|---|---|
| *Interaction "ns." not significant,* "*" *95% significance,* "**" 99% *significance according to Newman Keuls test.* Definitions of columns A-J: see table 1 | | | | | | | | | | |

**Table 8 - Statistical significance of factors and their interaction**

| **Factor** | **K** | **L** | **M** | **N** | **O** | **P** | **Q** | **R** | **S** | **T** | **U** | **V** | **W** |
|---|---|---|---|---|---|---|---|---|---|---|---|---|---|
| **Water regime factor** | *ns.* | *ns.* | * | *ns.* | *ns.* | *ns.* | *ns.* | *ns.* | *ns.* | *ns.* | *ns.* | * | *ns.* |
| **Product factor** | *ns.* | *ns.* | *ns.* | *ns.* | *ns.* | *ns.* | *ns.* | *ns.* | *ns.* | *ns.* | *ns.* | *ns.* | *ns.* |
| **Interaction** | *ns.* | *ns.* | *ns.* | *ns.* | *ns.* | *ns.* | *ns.* | *ns.* | *ns.* | *ns.* | * | *ns.* | *ns.* |

| | | | | | | | | | | | | | |
|---|---|---|---|---|---|---|---|---|---|---|---|---|---|
| *Interaction "ns." not significant,* "*" 95% *significance,* "**" 99% *significance according to Newman Keuls test.* Definitions of columns K-W: see table 2 | | | | | | | | | | | | | |

**Table 9 - Statistical significance of factors and their interaction**

| **Factor** | **X** | **Y** | **Z** | **AA** | **AB** | **AC** | **AD** | **AE** | **AF** | **AG** |
|---|---|---|---|---|---|---|---|---|---|---|
| **Water regime factor** | ** | *ns.* | *ns.* | *ns.* | *ns.* | *ns.* | *ns.* | *ns.* | *ns.* | ** |
| **Product factor** | *ns.* | ** | *ns.* | *ns.* | *ns.* | ** | *ns.* | ** | ** | ** |
| **Interaction** | *ns.* | ** | *ns.* | *ns.* | *ns.* | * | *ns.* | * | ** | *ns.* |

| | | | | | | | | | | |
|---|---|---|---|---|---|---|---|---|---|---|
| *Interaction "ns." not significant,* "*" 95% *significance,* "**" 99% *significance according to Newman Keuls test.* Definitions of columns X-AG: see table 3 | | | | | | | | | | |

### Comment

The differences with the untreated controls in all three water regimes are very evident. The product according to the invention gave good yields with both a standard and reduced water regime.

## Claims

1. A granular fertilizer formulation comprising or, alternatively, consisting of granules; said granules comprising or, alternatively, consisting of at least one fertilizing substance based on nitrogen (N), or nitrogen-phosphorous (NP), or nitrogen-phosphorous-potassium (NPK) having the capacity to favour the germination and rooting of seeds and plants in the initial phases of their development, wherein an effective amount of a polymer of vegetable origin capable of retaining and gradually releasing water has been inserted and/or absorbed and/or adsorbed and/or incorporated in and/or coated on said granules; said polymer being selected from the group consisting of the water-soluble derivatives of guar gum, said water-soluble derivative of guar gum being a water-soluble cationic polymer derived from guar gum, wherein said water-soluble cationic polymer derived from guar gum is a polysaccharide polymer having a molecular weight of 200,000-300,000 dalton; said polymer being present in an amount by weight comprised from 0.5% to 10% by weight relative to the total weight of the formulation.

2. The formulation according to claim 1, wherein said granules comprising or, alternatively, consisting of said at least one fertilizing substance and said water-soluble derivatives of guar gum are water-soluble granules and homogeneous small granules or microgranules having an average diameter comprised from 0.01 mm to 3 mm, preferably having an average diameter comprised from 0.5 mm to 1.2 mm.

3. The formulation according to claim 1 or 2, wherein said at least one fertilizing substance is selected from the group consisting of nitrogen (N), ammonia nitrogen (N), organic nitrogen (N), ureic nitrogen (N); monoammonium phosphate (MAP) ; said fertilizing substance being present in an amount by weight comprised from 90% by weight to 99.5% by weight, relative to the total weight of the formulation.

4. The formulation according to any one of the preceding claims, wherein said formulation further comprises one or more substances selected from among zinc (Zn), zinc (Zn) sulphate monohydrate, boron (B), carbon (C), organic carbon (C) of biological origin, humic acids, Leonardite, slow-release humic acid in powder, sulphuric anhydride, and mixtures thereof, in addition to processing additives and co-formulants; all in a variable amount by weight comprised from 0% to 10% by weight, preferably comprised from 0% to 0.5% by weight, relative to the total weight of the formulation.

5. The formulation according to any one of the preceding claims, wherein said polymer is present in an amount by weight comprised from 1% to 5% by weight, preferably from 2% to 4% by weight, relative to the total weight of the formulation.

6. The formulation according to any one of the previous claims, wherein said polysaccharide polymer is of the galactomannan type consisting of galactose/mannose units with one galactose bond for every two of mannose.

7. The formulation according to any one of the preceding claims, wherein said formulation has a specific density comprised from 0.7 Kg/litre to 0.9 Kg/litre, preferably 0.8 Kg/litre.

8. A process for preparing the formulation according to any one of the preceding claims, comprising the following steps:
- finely grinding the raw materials of the formulation; then adding and mixing them at room temperature in a mixer for powders, adding water in an amount sufficient to obtain a homogeneous fluid paste of particles;
- directing and making said fluid paste flow on a belt, a fluid bed, in movement, wherein the particles rotate and become stratified so as to form granules/microgranules of the desired size;
- simultaneously blowing hot air at an initial temperature of 80°C; gradually lowering the temperature to 20°C, so as to obtain said dry granules/microgranules.

9. A use of a granular formulation according to any one of claims 1 to 7, as a fertilizer formulation for treating vegetative surfaces requiring an increase in the soil water retention capacity.

## Patentansprüche

1. Körnige Düngemittelformulierung, umfassend, oder alternativ bestehend aus, Körnern; wobei die Körner umfassen, oder alternativ bestehen aus, mindestens einer düngenden Substanz auf Stickstoff (N)-, oder Stickstoff-Phosphor (NP)-, oder Stickstoff-Phosphor-Kalium (NPK)-Basis, die in der Lage ist, das Keimen und die Bewurzelung von Samen und Pflanzen in den Anfangsphasen ihrer Entwicklung zu begünstigen, wobei eine wirksame Menge eines Polymers pflanzlichen Ursprungs, das in der Lage ist, Wasser zu speichern und graduell freizusetzen, in die Körner eingebracht und/oder absorbiert und/oder adsorbiert und/oder inkorporiert und/oder auf die Körner aufgetragen ist; wobei das Polymer ausgewählt ist aus der Gruppe, bestehend aus wasserlöslichen Derivaten von Guargummi, wobei das wasserlösliche Derivat von Guargummi ein von Guargummi abgeleitetes wasserlösliches kationisches Polymer ist, wobei das von Guargummi abgeleitete wasserlösliche kationische Polymer ein Polysaccharid-Polymer mit einem Molekulargewicht von 200.000-300.000 Dalton ist; wobei das Polymer in einer Gewichtsmenge von 0,5 Gew.-% bis 10 Gew.-%, bezogen auf das Gesamtgewicht der Formulierung, vorhanden ist.

2. Formulierung gemäß Anspruch 1, wobei die Körner umfassend, oder alternativ bestehend aus, die mindestens eine düngende Substanz und die wasserlöslichen Derivate von Guargummi, wasserlösliche Körner und homogene kleine Körner oder Mikrokörner mit einem mittleren Durchmesser von 0,01 mm bis 3 mm, vorzugsweise mit einem mittleren Durchmesser von 0,5 mm bis 1,2 mm, sind.

3. Formulierung gemäß Anspruch 1 oder 2, wobei die mindestens eine düngende Substanz ausgewählt ist aus der Gruppe, bestehend aus Stickstoff (N), Ammoniak-Stickstoff (N), organischem Stickstoff (N), Harnstoff-Stickstoff (N); Monoammoniumphosphat (MAP); wobei die düngende Substanz in einer Gewichtsmenge von 90 Gew.-% bis 99,5 Gew.-%, bezogen auf das Gesamtgewicht der Formulierung, vorhanden ist.

4. Formulierung gemäß mindestens einem der vorhergehenden Ansprüche, wobei die Formulierung ferner eine oder mehrere Substanzen umfasst, ausgewählt aus Zink (Zn), Zink (Zn)-Sulfat-Monohydrat, Bor (B), Kohlenstoff (C), organischem Kohlenstoff (C) biologischen Ursprungs, Huminsäuren, Leonardit, langsam freisetzende Huminsäure in Pulverform, Schwefelsäureanhydrid und Mischungen davon, zusätzlich zu Prozessadditiven und Beistoffen; alle in einer variablen Gewichtsmenge von 0 Gew.-% bis 10 Gew.-%, vorzugsweise von 0 Gew.-% bis 0,5 Gew.-%, bezogen auf das Gesamtgewicht der Formulierung.

5. Formulierung gemäß mindestens einem der vorhergehenden Ansprüche, wobei das Polymer in einer Gewichtsmenge von 1 Gew.-% bis 5 Gew.-%, vorzugsweise von 2 Gew.-% bis 4 Gew.-%, bezogen auf das Gesamtgewicht der Formulierung, vorhanden ist.

6. Formulierung gemäß mindestens einem der vorhergehenden Ansprüche, wobei das Polysaccharid-Polymer vom Galaktomannan-Typ ist, bestehend aus Galaktose/Mannose-Einheiten mit einer Galaktose-Bindung für je zwei Mannose.

7. Formulierung gemäß mindestens einem der vorhergehenden Ansprüche, wobei die Formulierung eine spezifische Dichte von 0,7 kg/Liter bis 0,9 kg/Liter, vorzugsweise 0,8 kg/Liter, aufweist.

8. Verfahren zur Herstellung der Formulierung gemäß mindestens einem der vorhergehenden Ansprüche, umfassend die folgenden Schritte:
- Feinvermahlung der Rohstoffe der Formulierung; anschließend Zugabe und Mischen bei Raumtemperatur in einem Pulvermischer, Zugabe von Wasser in einer Menge, die ausreicht, um eine homogene fluide Paste aus Partikeln zu erhalten;
- Leiten und zum Fließen bringen der fluiden Paste auf einem Band, einem Fließbett, in Bewegung, wobei die Partikel rotieren und geschichtet werden, um Körner/Mikrokörner der gewünschten Größe zu bilden;
- gleichzeitiges Einblasen von Heißluft bei einer Anfangstemperatur von 80 °C; graduelles Absenken der Temperatur auf 20 °C, um die trockenen Körner/Mikrokörner zu erhalten.

9. Verwendung einer körnigen Formulierung gemäß mindestens einem der Ansprüche 1 bis 7 als Düngemittelformulierung zur Behandlung von Vegetationsflächen, die eine Erhöhung des Wasserrückhaltevermögens des Bodens erfordern.

## Revendications

1. Formulation de fertilisant granulaire comprenant ou, en variante, constituée de granules ; lesdits granules comprenant ou, en variante, étant constitués d'au moins une substance fertilisante à base d'azote (N), ou d'azote-phosphore (NP), ou d'azote-phosphore-potassium (NPK), ayant la capacité de favoriser la germination et l'enracinement de graines et plantes dans les phases initiales de leur développement, dans laquelle une quantité efficace d'un polymère d'origine végétale capable de retenir et de libérer progressivement l'eau a été insérée et/ou absorbée et/ou adsorbée et/ou incorporée dans et/ou déposée sous forme de revêtement sur lesdits granules ; ledit polymère étant choisi dans le groupe constitué par les dérivés solubles dans l'eau de gomme de guar, ledit dérivé soluble dans l'eau de gomme de guar étant un polymère cationique soluble dans l'eau dérivé de gomme de guar, dans laquelle ledit polymère cationique soluble dans l'eau dérivé de gomme de guar est un polymère de polysaccharide ayant un poids moléculaire de 200 000 à 300 000 daltons ; ledit polymère étant présent en une quantité en poids allant de 0,5 % à 10 % en poids par rapport au poids total de la formulation.

2. Formulation selon la revendication 1, dans laquelle lesdits granules comprennent ou, en variante, sont constitués de ladite au moins une substance fertilisante, et lesdits dérivés solubles dans l'eau de gomme de guar sont des granules solubles dans l'eau et de petite granules ou des microgranules homogènes ayant un diamètre moyen allant de 0,01 mm à 3 mm, de préférence ayant un diamètre moyen allant de 0,5 mm à 1,2 mm.

3. Formulation selon la revendication 1 ou 2, dans laquelle ladite au moins une substance fertilisante est choisie dans le groupe constitué par l'azote (N), l'azote d'ammoniac (N), l'azote organique (N), l'azote d'urée (N) ; le monophosphate d'ammonium (MAP) ; ladite substance fertilisante étant présente en une quantité en poids allant de 90 % en poids à 99,5 % en poids, par rapport au poids total de la formulation.

4. Formulation selon l'une quelconque des revendications précédentes, dans laquelle ladite formulation comprend en outre une ou plusieurs substances choisies parmi le zinc (Zn), le sulfate de zinc (Zn) monohydraté, le bore (B), le carbone (C), le carbone organique (C) d'origine biologique, les acides humiques, la léonardite, l'acide humique en poudre à libération lente, l'anhydride sulfurique, et leurs mélanges, en plus des additifs de traitement et des agents de co-formulation ; tous en une quantité en poids variable allant de 0 % à 10 % en poids, de préférence allant de 0 % à 0,5 % en poids, par rapport au poids total de la formulation.

5. Formulation selon l'une quelconque des revendications précédentes, dans laquelle ledit polymère est présent en une quantité en poids allant de 1 % à 5 % en poids, de préférence de 2 % à 4 % en poids, par rapport au poids total de la formulation.

6. Formulation selon l'une quelconque des revendications précédentes, dans laquelle ledit polymère de polysaccharide est du type galactomannane constitué de motifs galactose/mannose avec une liaison galactose pour deux mannoses.

7. Formulation selon l'une quelconque des revendications précédentes, dans laquelle ladite formulation a une masse volumique nette allant de 0,7 kg/litre à 0,9 kg/litre, de préférence de 0,8 kg/litre.

8. Procédé pour préparer la formulation selon l'une quelconque des revendications précédentes, comprenant les étapes suivantes :
- broyer finement des matières premières de la formulation ; puis introduire et mélanger celles-ci à la température ambiante dans un mélangeur pour poudres, ajouter de l'eau en une quantité suffisante pour que soit obtenue une pâte fluide homogène de particules ;
- diriger et faire s'écouler ladite pâte fluide sur un tapis roulant, un lit fluide, en mouvement, dans lequel les particules tournent et deviennent stratifiées de façon à former des granules/microgranules ayant la taille souhaitée ;
- souffler simultanément de l'air chaud à une température initiale de 80 °C ; abaisser progressivement la température à 20 °C, de façon à obtenir lesdits granules/ microgranules secs.

9. Utilisation d'une formulation granulaire selon l'une quelconque des revendications 1 à 7 en tant que formulation de fertilisant pour traiter des surfaces végétales requérant une augmentation de la capacité de rétention d'eau du sol.
